# EUROPÄISCHE PATENTSCHRIFT

(11) **EP 3 932 274 B1**
(45) Veröffentlichungstag und Bekanntmachung des Hinweises auf die Patenterteilung: **20.08.2025**
(21) Anmeldenummer: 21181920.6
(22) Anmeldetag: 28.06.2021
(51) Int. Cl.: A47K 3/32, B64D 11/00, B60R 15/00

(54) **KOMFORTBAD FÜR KLEINRÄUME**
BATH FOR SMALL SPACES
SALLE D'EAU CONFORTABLE POUR PETITES PIÈCES

(30) Priorität: 01.07.2020 DE 202020002829 U
(43) Veröffentlichungstag der Anmeldung: 05.01.2022
(73) Patentinhaber: Kranemann, Karl Robert, 50933 Köln Nordrhein-Westfalen (DE)
(72) Erfinder: Kranemann, Karl Robert, 50933 Köln Nordrhein-Westfalen (DE)
(74) Vertreter: Cohausz Hannig Borkowski Wißgott

(56) Entgegenhaltungen:
- WO-A1-2008/111853
- WO-A1-2018/077816
- CN-U- 210 083 113
- DE-A1- 19 651 451
- DE-U1- 202019 002 703
- FR-A- 1 346 115
- FR-A2- 2 333 095
- KR-A- 20190 127 341

## Beschreibung

Die Erfindung betrifft eine Sanitäreinrichtung in Kleinräumen, insbesondere von Wohnmobilen, Flugzeugen, Yachten oder Tiny-Houses mit mindestens einem Duschraum sowie einer angrenzenden Liegefläche (Bett), wobei bei Nichtnutzung des Duschbereichs zur Nutzung des Bettes ein die angrenzende Liegefläche verlängerndes Teil in den Duschbereich, insbesondere durch Einlegen, Abklappen, Einschwenken oder dergleichen eingebracht wird, oder die angrenzende Liegefläche in den Duschbereich verschoben wird, so dass damit die gesamte benötigte Bettfläche zu Verfügung steht, und der Duschraum eine verschließbare Öffnung der Duschwand zumindest in Richtung der Bettfläche aufweist.

Eine solche Sanitäreinrichtung ist aus der Publikation CN 210 083 113 U bekannt. Sanitäreinrichtungen werden auch offenbart in den Publikationen FR 2 333 095 A2, FR 1 346 115 A, WO 2008/111853 A1, WO 2018/077816 A1, KR 2019 0127341 A, DE 196 51 451 A1 und DE 20 2019 002703 U1.

Kleinräume z.B. in Wohnmobilen, Flugzeugen, Yachten und Tiny-Houses sind häufig mit Schlafgelegenheiten und Sanitäreinrichtungen ausgestattet. Der stetig zunehmende Komfortanspruch der Nutzer spiegelt sich dabei in der Ausstattung wieder. Inzwischen sind Sanitäreinrichtungen mit Toilette und Duschmöglichkeit weit verbreitet. Dabei sind aufgrund des begrenzten Raumangebots häufig Kombinationseinrichtungen vorzufinden, bei denen der Toilettenraum zugleich eine Duscheinrichtung in Gestalt einer Duschwanne aufweist. Hierbei wurden vielerlei raumsparende Lösungen entwickelt, bei denen Teile der Sanitäreinrichtung entweder verschiebbar angeordnet wurden (so z.B. verschiebbare Toilette - DE 20 2009 004 485 U1 oder höhenverschiebbares Waschbecken - DE 20 2007 002 112 U1). Darüber hinaus sind Konstruktionen bekannt geworden, die durch die Anbringung von Duschvorhängen oder verschiebbaren Trennwänden die Durchfeuchtung des gesamten Sanitärraums bei Gebrauch der Duscheinrichtung verhindern sollen. Diese Konstruktionen konnten jedoch nicht verhindern, dass weiterhin zumindest Teile der Sanitäreinrichtung, wie zum Beispiel Wände oder die Duschwanne nach dem Gebrauch der Dusche nass blieben und somit abgetrocknet werden mussten, bevor die Toilette in der Kombinationseinrichtung anschließend genutzt werden konnte. Auch ist eine gleichzeitige Nutzung einer Sanitäreinrichtung mit Dusche einerseits und Toilette andererseits durch mehrere Nutzer bei diesen Konstruktionen nicht möglich. Auch ist damit aufgrund der Größe der Duschwanne der Raumbedarf höher, als dies für die Unterbringung allein einer Toilette erforderlich wäre.

Mit DE 20 2019 002 703 U1 wird versucht zumindest das Problem des nassen Duschumfeldes dadurch zu mindern, dass an verschiebbaren Duschwänden bodenseitig Abziehlippen angebracht sind, durch die bei Verschieben der Wände nach Nutzung der Dusche der Boden weitgehend von Nässe befreit werden soll. Eine vollständige Trocknung wird dabei naturgemäß nicht erreicht und auch ist eine gleichzeitige Nutzung der Toilette während der Nutzung der Dusche durch eine andere Person nicht möglich.

Aufgabe der Erfindung ist es, zum einen in der Schlafstellung sowohl keinerlei Kontakt mit den etwaig noch feuchten Flächen der Duschinnenwände zu haben, sowie zum anderen vom Wohnbereich aus die Duschinnenwände sowohl in der Schlafstellung als auch in der Duschstellung nicht sehen zu können und damit eine wohnlichere Atmosphäre zu schaffen.

Insbesondere soll darüber hinaus im Duschbereich eine optimale Raumausnutzung insbesondere bei zumindest in Teilbereichen gekrümmten Außenwänden, wie sie beispielsweise bei ausgebauten Kastenwagen oder Flugzeugen vorzufinden sind, gewährleistet werden.

Erfindungsgemäß wird dies mit einer Sanitäreinrichtung gemäß den Merkmalen von Anspruch 1 erreicht.

Ausführungsbeispiele der Erfindung sind in den Zeichnungen perspektivisch dargestellt und werden im Folgenden näher beschrieben. Es zeigen
- Fig. 1a: eine nicht erfindungsgemäße Ausführung mit Duschfunktion,
- Fig. 1b: eine nicht erfindungsgemäße Ausführung mit Schlaffunktion,
- Fig. 2a: eine erste erfindungsgemäße Ausführung mit Duschfunktion,
- Fig. 2b: die erste erfindungsgemäße Ausführung mit Schlaffunktion,
- Fig. 3a: eine zweite erfindungsgemäße Ausführung mit Duschfunktion,
- Fig. 3b: die zweite erfindungsgemäße Ausführung mit Schlaffunktion,
- Fig. 4a: eine dritte erfindungsgemäße Ausführung mit Duschfunktion,
- Fig. 4b: eine vierte erfindungsgemäße Ausführung mit verschiedenen Wandstellungen von Duschfunktion zur Schlaffunktion,
- Fig. 5: eine fünfte erfindungsgemäße Ausführung mit Duschfunktion,
- Fig. 6: die fünfte erfindungsgemäße Ausführung mit Schlaffunktion.

Die Erfindung sieht vor, dass im Duschbereich (D), der von allen Bereichen (Schlafen, Kochen, Wohnen, Toilette) zeitlich am kürzesten genutzt wird, eine verschließbare, im horizontalen Querschnitt vorzugsweise L-förmige Öffnung (Ö) der Duschwände angeordnet ist. Bei Nichtnutzung des Duschbereichs wird zur Nutzung der Bettfläche (B) ein Teil der Bettfläche (E) mit maximal der Größe der Grundfläche des Duschbereichs durch die Öffnung in den Duschbereich eingebracht, so dass damit die gesamte benötigte Bettfläche zu Verfügung steht.

Dies erfolgt insbesondere durch Einlegen, Ab- oder Hochklappen eines Teils der Bettfläche (E). Alternativ kann auch die Bettfläche (B) durch horizontales Verschieben in den Duschbereich eingebracht werden. Die Öffnung (Ö) ist dabei in der Höhe zumindest so zu bemessen, dass neben der Höhe der Liegefläche - regelmäßig in Gestalt einer Matratze und deren Unterlage - genügend Bewegungsfreiheit für den darauf liegenden Körperabschnitt des Liegenden gegeben ist, und wobei die Öffnung im horizontalen Querschnitt L-förmig über Eck oder halbrund oder ellipsenförmig ausgebildet ist.

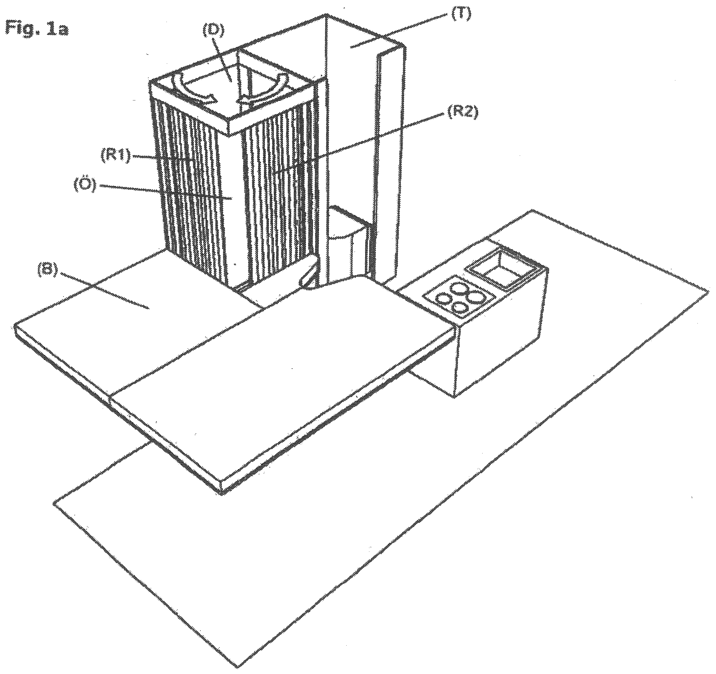

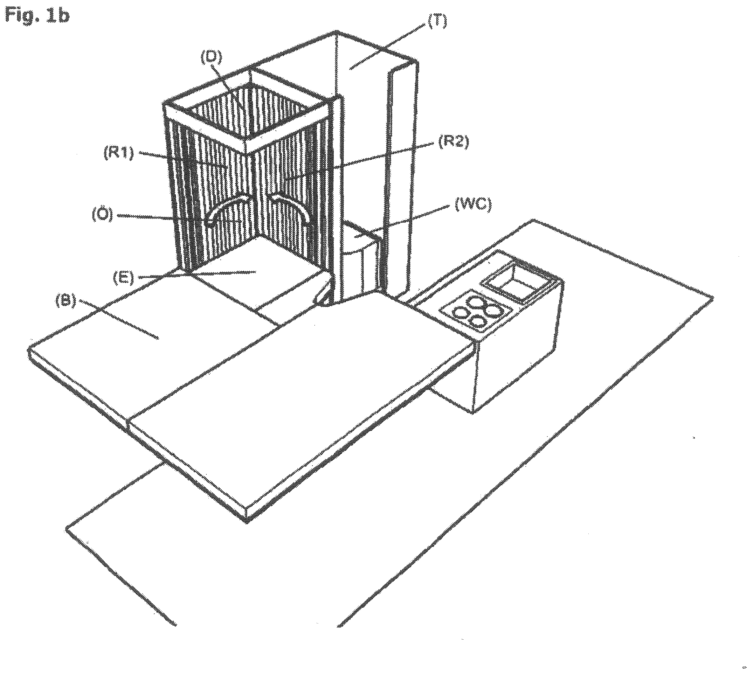

Soll der Duschbereich für ein Duschbad genutzt werden, wird der Teil der Bettfläche (E) aus dem Duschbereich entfernt, beispielsweise durch Herausnehmen oder -klappen und durch geeignete Vorrichtungen die Öffnung des Wandbereichs der Dusche verschlossen. Der Zugang zum Duschbereich erfolgt dabei über einen Zugang von dem sich an den Duschbereich unmittelbar anschließenden Toilettenbereich (T) (Fig. 1 - 6). Der Duschbereichszugang kann während des Duschens mit bereits bekannten Vorrichtungen wie halbtransparenten Kunststoff-Klapptüren, Duschvorhängen oder dergleichen gegenüber dem sich anschließenden Toilettenbereich verschlossen werden.

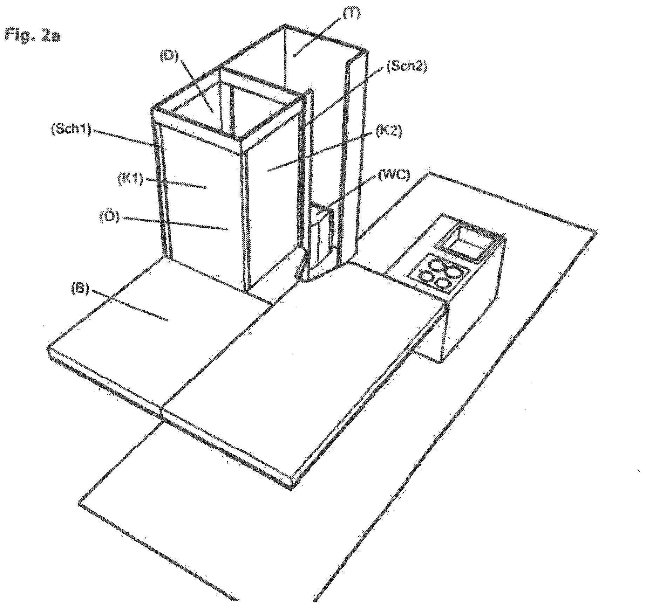

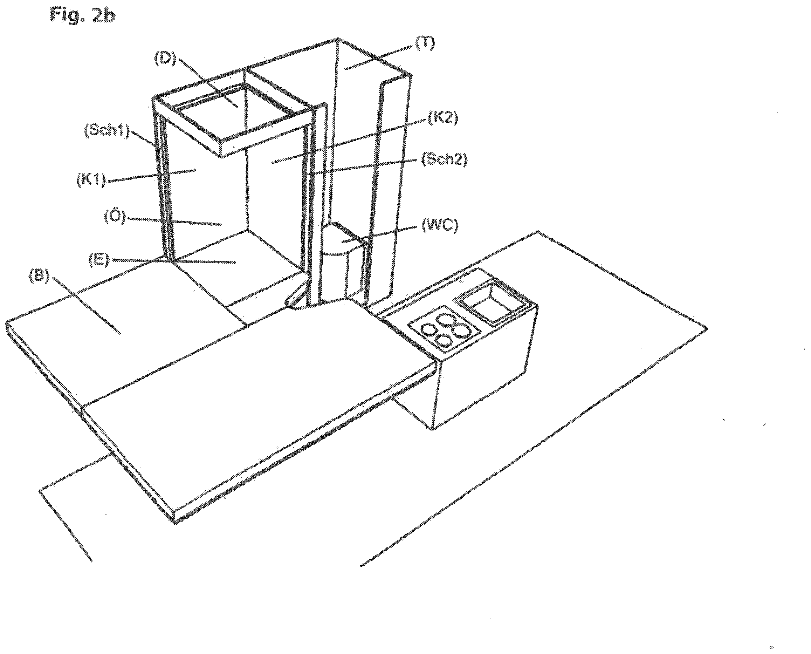

Das Verschließen der Öffnung (Ö) in den Duschwänden kann in nicht erfindungsgemäßer Ausführung beispielsweise durch eine oder mehrere flexible Abdeckungen wie eine Rollladen- bzw. Lamellentür (Fig. 1a: R1; R2) oder in erfindungsgemäßer Ausführung z.B. durch eine oder mehrere Klappen (Fig. 2a: K1; K2) erfolgen (Fig. 1a; Fig. 2a = verschlossen/Duschstellung; Fig. 1b; Fig. 2b = geöffnet/Schlafstellung).

Erfindungsgemäß ist dabei eine Ausführung vorgesehen, bei der bei Nutzung der gesamten Bettfläche (B,E =Schlafstellung) die infolge der Duschbenutzung etwaig noch feuchten Seitenwände des Duschbereichs (D) mindestens in dem Teil, mit dem der eingebrachte Teil der Bettfläche und der darauf Liegende in Berührung kommen kann, vollständig verdeckt werden.

Die Zielstellung, zum einen in der Schlafstellung sowohl keinerlei Kontakt mit den etwaig noch feuchten Flächen der Duschinnenwände zu haben, sowie zum anderen vom Wohnbereich aus die Duschinnenwände sowohl in der Schlafstellung als auch in der Duschstellung nicht sehen zu können und damit eine wohnlichere Atmosphäre zu schaffen, wird erfindungsgemäß in einer ersten Ausführung dadurch erreicht, dass zur Einrichtung der Schlafstellung zwei Teilflächen der Außenwände der Dusche (Fig. 2 a,b: K1, K2) nach Innen geklappt werden und damit die gegebenenfalls nach dem Duschvorgang noch nassen Seitenwände mindestens in dem Teil, mit dem der eingebrachte Teil der Bettfläche und der darauf Liegende in Berührung kommen kann, verdeckt werden. Dadurch können nach Erweiterung der Bettfläche weder die Bettfläche noch der darauf Liegende und etwaig genutzte Bettdecken etc. mit der Feuchtigkeit in Berührung kommen (Fig. 2a = verschlossen/Duschstellung; Fig. 2b = geöffnet/Schlafstellung). Auch optisch wird eine wohnliche Atmosphäre geschaffen, indem die Duschinnenwände sowie die Dusch-Armaturen etc. sowohl in der Duschstellung als auch in der Schlafstellung nicht mehr wahrgenommen werden, was angesichts des insgesamt nur geringen Raumangebots einen erheblichen Komfortgewinn darstellt.

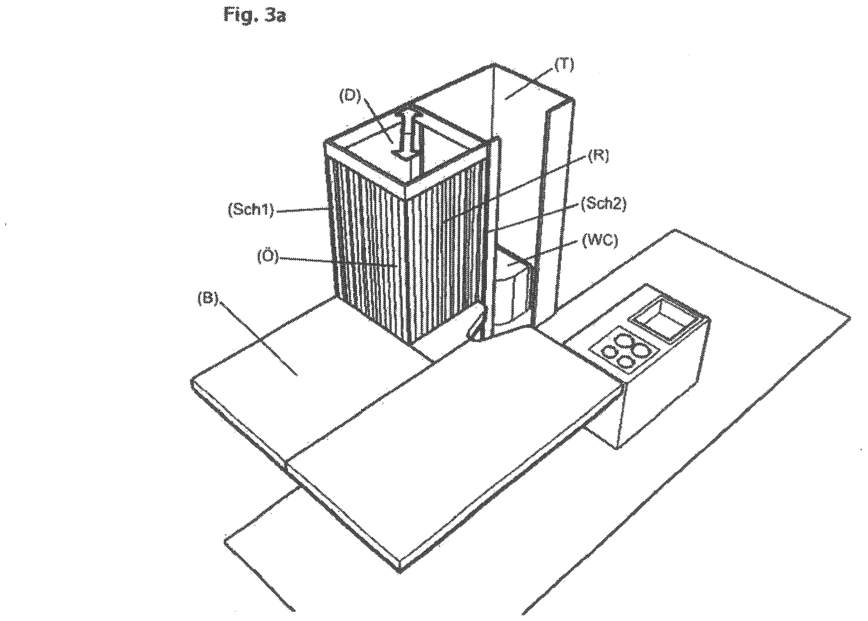

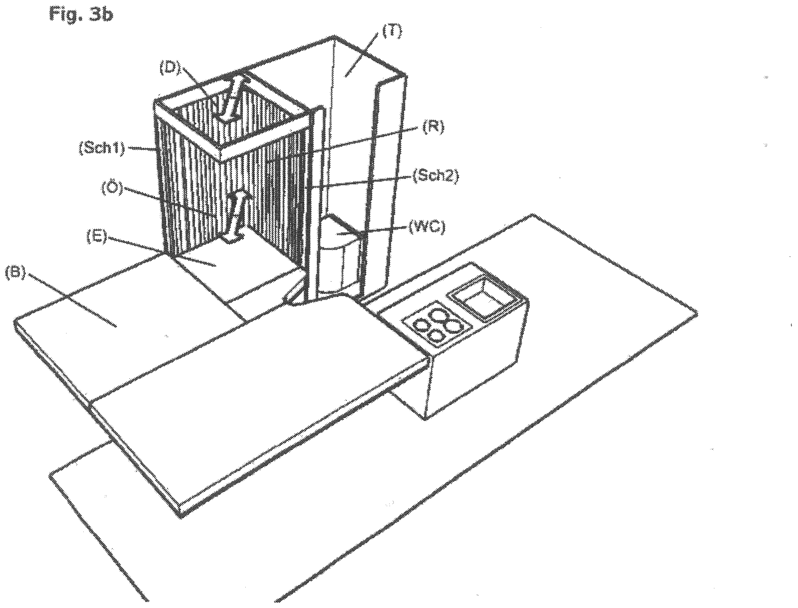

In einer weiteren zweiten erfindungsgemäßen Ausführung kann dies erreicht werden, indem die Öffnung (Ö) beispielsweise im horizontalen Schnitt L-förmig über Eck oder halbrund oder ellipsenförmig ausgeführt ist und an den horizontal gegenüberliegenden Enden der Öffnung jeweils die Enden einer Rollladen- bzw. Lamellenfläche (Fig. 3a, 3b: R) oder alternativ einer flexiblen Platte insbesondere mittels Scharnieren (Sch1, Sch2), Klavierband oder dergleichen beweglich angeschlagen sind und diese Fläche (R) bzw. flexible Platte in Duschstellung (Fig. 3a) die Öffnung (Ö) verschließt. Zur Einrichtung der Schlafstellung (Fig.3b) wird diese Fläche/Platte (R) in den Innenraum des Duschbereichs (D) in Richtung der der Öffnung (Ö) gegenüberliegenden Innenwände des Duschraums (D) durch Drücken von außerhalb oder Zug von innerhalb des Duschraums verbracht. Nach Erweiterung der Bettfläche (B, E) ist damit der sich über der Grundfläche des Duschbereichs befindende Bettbereich (E) ebenfalls gegen die nach etwaiger Duschbenutzung noch feuchten Seitenwände vollständig geschützt und die Duschinnenwände weder in Schlaf- noch in Duschstellung sichtbar. Weiterhin wird insbesondere dann, wenn die Seiten der Öffnung (Ö) in horizontaler Sicht (Querschnitt) eine ungleiche Länge haben, durch die Flexibiltät der Lamellen-/Rolladenfläche bzw. der flexiblen Platte erreicht, dass bei einem Wechsel von der Dusch- in die Schlafstellung (bzw. umgekehrt) durch die Rolladen-/Lamellenfläche bzw. die flexible Platte die Längenunterschiede ausgeglichen werden.

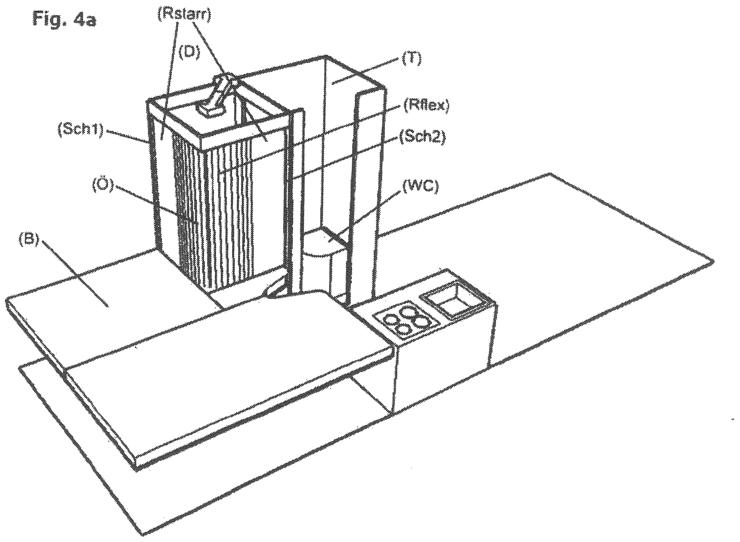

In einer weiteren dritten erfindungsgemäßen Ausführung, wird nicht die gesamte Fläche/Platte (R) flexibel ausgeführt, sondern nur ein Teilbereich, vorzugsweise im Eckbereich der Öffnung (Ö) (Fig. 4a). Dadurch erfolgt beim Verbringen der Fläche/Platte (RStarr, RFlex) von der Duschstellung in die Schlafstellung (bzw. umgekehrt) durch die nicht bzw. weniger flexiblen Seitenteile (RStarr) der Fläche/Platte eine insgesamt bessere Führung des flexiblen Teils (RFlex), der dabei weniger in sich verwinden kann. Die vorerwähnte Möglichkeit des Ausgleichs unterschiedlicher Längen der Seiten der Öffnung (Ö) in horizontaler Sicht (Querschnitt) ist bei ausreichender Dimensionierung des flexiblen Teilbereichs ebenfalls gewährleistet.

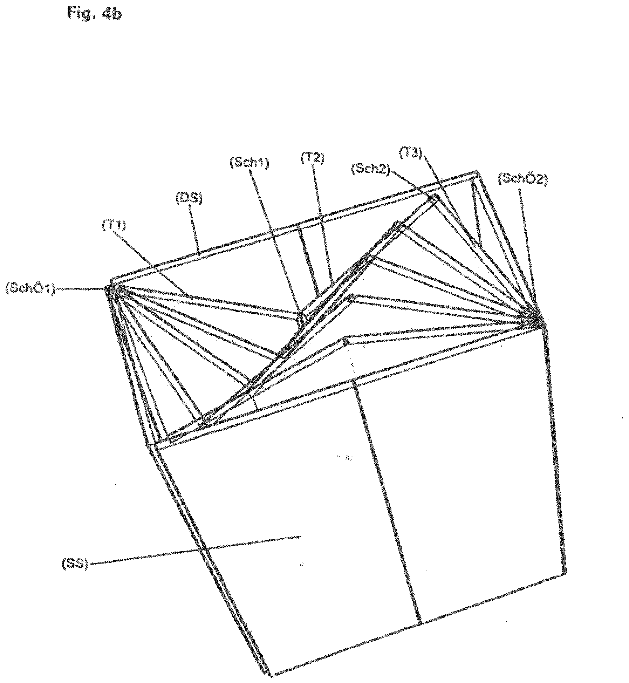

Schließlich kann in einer weiteren vierten erfindungsgemäßen Ausführung das Verschließen der Öffnung zur Herstellung der Duschstellung auch durch mindestens drei vorzugsweise starre Platten (Fig. 4b: T1; T2; T3) erfolgen, die zum einen miteinander seitlich durch Scharniere, Klavierband oder dergleichen um die Hochachse beweglich verbunden sind (Fig. 4b: Sch1; Sch2) und zum anderen die erste (T1) und die letzte (T3) Platte mit der Öffnung ebenfalls durch Scharniere, Klavierband oder dergleichen (Fig. 4b: SchÖ2) um die Hochachse seitlich beweglich verbunden sind (Fig. 4b: SchÖ1, SchÖ2), während sie durch Druck von außerhalb des Duschraums oder/und durch Zug von Innerhalb des Duschraums in horizontaler Richtung in die gegenüberliegende Stellung der Öffnung gebracht werden kann und damit einerseits die Öffnung freigibt und gleichzeitig die Seitenwände mindestens in dem Teil, mit dem der eingebrachte Teil der Bettfläche und der darauf Liegende in Berührung kommen kann, vollständig verdeckt und den Zugang zum Duschraum zumindest teilweise abdeckt.

Dabei können die Platten sowie die Scharniere auch aus einem Werkstück aus einem geeigneten Material, vorzugsweise Kunststoff bestehen, wobei die Scharnier-Funktion durch entsprechende Bearbeitung des Materials, regelmäßig dessen Verdünnung durch Fräsen, Pressen oder Stanzen hergestellt wird (Filmscharnier), was insbesondere auch die Dichtigkeit während des Duschvorgangs begünstigt. Fig. 4b zeigt dabei, wie bei einer Ausführung mit drei Platten von der Duschstellung (DS) durch Drücken von außen über diverse Zwischenstellungen die gegenüberliegende Schlafstellung (SS) der Platten erreicht wird. (In Fig. 4b werden dabei im Sinne einer vereinfachenden Darstellung nur die die Öffnung verschließenden Gegenstände dargestellt, von einer Darstellung der Öffnung selbst sowie des Bett- und Duschbereichs etc. wird abgesehen.) Auch hier ist durch entsprechende Dimensionierung der einzelnen Platten (T1; T2; T3) die Möglichkeit des Ausgleichs unterschiedlicher Längen der Seiten der Öffnung (Ö) in horizontaler Sicht (Querschnitt) gegeben, insbesondere sofern diese L-förmig ausgestaltet ist.

Indem die vorstehenden Verschlussvarianten jeweils an den horizontal gegenüberliegenden Enden der Öffnung der im horizontalen Schnitt L-förmigen über Eck, halbrunden oder ellipsenförmigen Öffnung fixiert sind, wird erreicht, dass in Duschstellung, d.h. bei verschlossener Öffnung, der damit gebildete Duschraum maximal ausgenutzt wird. Insbesondere bildet die - gegebenenfalls gekrümmte - Außenwand des Wohnmobils, Flugzeugs, Raums oder dergleichen zugleich eine Seitenwand des Duschraums, ohne dass hier zur Herstellung der Duschstellung aus der Schlafstellung noch eine gesonderte - gegebenenfalls faltbare - Trennwand, Vorhang oder dergleichen den regelmäßig ohnehin nur sehr begrenzt zur Verfügung stehenden Raum verringern würde. Dem kommt insbesondere bei ausgebauten Kastenwagen, Flugzeugen etc. mit ihren regelmäßig gekrümmten Außenwänden besondere Bedeutung zu, da hier eine Trennwand, Vorhang oder dergleichen, die die Krümmung der Außenwände nicht vollständig nachvollzieht, regelmäßig einen noch größeren Raumverlust in der Duschstellung zur Folge hätte. Die beidseitige Befestigung an den in horizontaler Sicht gegenüberliegenden Enden der Öffnung zusammen mit der Verbindung der Verschluss-Elemente untereinander führt ferner zu einer erhöhten Stabilität der Verschlusseinheit insgesamt. Indem schließlich lediglich die Öffnung verschlossen wird und keine darüber hinausgehenden Trennvorrichtungen erforderlich sind, stellt dies neben einer Kosten- auch eine Gewichtsoptimierung dar. Dies ist nicht nur bei Luftfahrzeugen, sondern mindestens ebenso bei Wohnmobilen relevant, da hier gesetzliche Gewichtsbeschränkungen (z.B. in Europa 3,5 to.) von Relevanz sind.

Die Abdichtung in Duschstellung kann jeweils beispielsweise durch umlaufende Gummidichtung und/oder Magnetband oder dergleichen sichergestellt werden.

Bezüglich der Erweiterung der Bettfläche (B) auf die gesamte gewünschte Liegefläche durch Einbringen der Erweiterungsfläche E über der Grundfläche des Duschbereichs (D) sind vielfältige konstruktive Lösungen denkbar:
In einer Ausgestaltung wird der Erweiterungsteil (E) der Bettfläche in Gestalt eines Matratzenteils einschließlich der darunter sich befindenden Unterlage (Platte, Lattenrost oder dergleichen) auf entsprechende Auflagen, die beispielsweise an den Duschseitenwänden angebracht sind und/oder durch die Kante der Öffnung (Ö) gebildet wird, aufgelegt.

Ebenso kann beispielsweise durch Ausziehen eines mittels Teleskopschienen oder -rohren gebildeten Lastenauszugs insbesondere aus dem Bereich unter dem an die Dusche angrenzenden Bettteil (B) in den Duschbereich (D) eine Auflage für den Matratzenteil einschließlich der sich etwaig darunter sich befindenden Unterlage geschaffen werden.

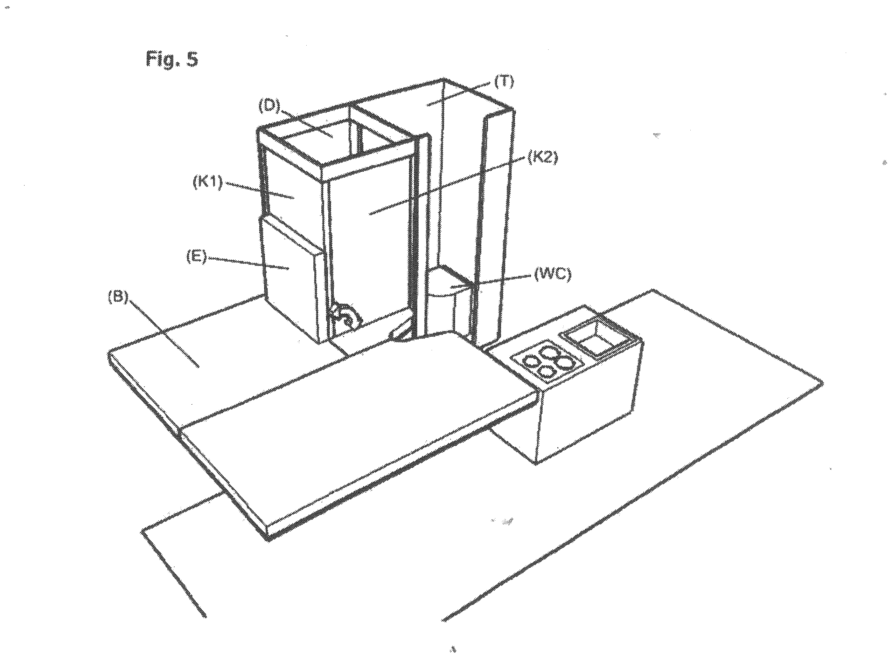

Auch kann der Matratzenteil in einer fünften erfindungsgemäßen Ausführung einschließlich der sich darunter befindenden Unterlage (E) insbesondere an seinem zur übrigen Bettfläche zeigenden Ende (B) klappbar gelagert sein und für die Duschstellung um-, hoch- (Fig.5) oder abgeklappt werden, wobei Fixierungen in hochgeklappter und/oder abgeklappter Stellung beispielsweise über Sperrklinken oder dergleichen erfolgen können. Dabei kann in einer weiteren Ausführung auch die unter der Matratze sich befindende Unterlage nach dem Klappen zugleich zum Verschließen der Öffnung des Duschbereichs oder eines Teils davon in Duschstellung dienen.

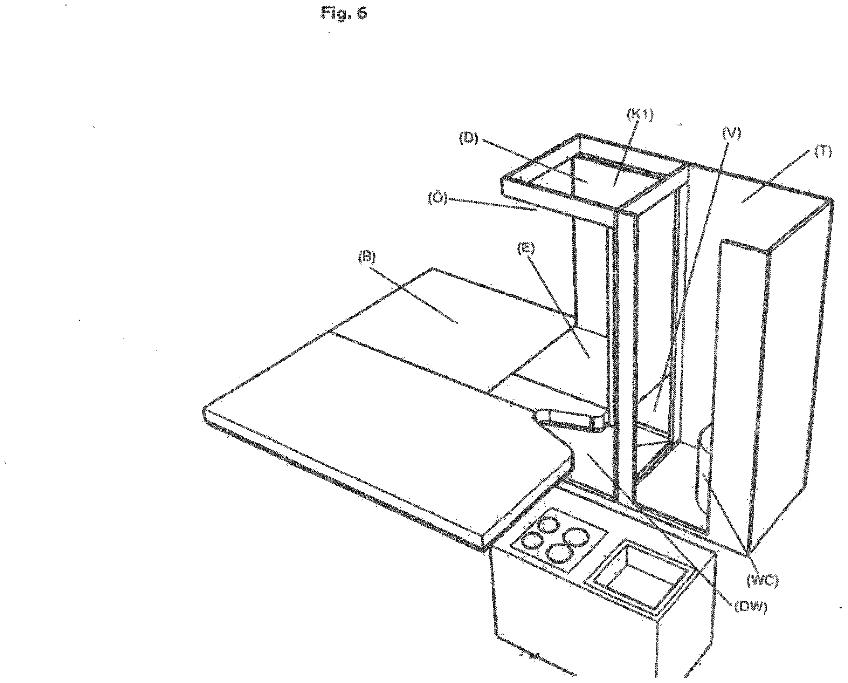

Eine besonders funktionale und flächensparende Ausgestaltung erfolgt erfindungsgemäß durch die Ausführung der Sanitäreinrichtung dergestalt, dass sich an den Duschbereich (D) unmittelbar der Toilettenbereich (T) anschließt und der Zugang zum Duschbereich aus dem Toilettenbereich erfolgt (Fig. 1-6). Dabei kann insbesondere die Öffnung (Ö) nur bis zur Unterkante des Einlegeteils (E) reichen, während der verbleibende Teil der Duschwände (DW) starr ausgebildet ist. Dadurch entsteht bei entsprechend hoher Anordnung des Bettes in Schlafstellung unterhalb der Bettliegefläche ein Raumvolumen (V) (Fig.6), das bei Nutzung der Toilette (WC) in Schlafstellung nicht nur zusätzlichen Knie- und Fußraum bereitstellt und damit die sonst meist sehr beengte Raumsituation in komfortabler Weise erweitert, sondern auch genutzt werden kann, um beispielsweise Nasswäsche aufzuhängen, Schmutzwäsche zu lagern oder als sonstiger Stauraum zu dienen.

Auch kann in diesen Bereich ein Waschbecken, das schwenkbar montiert ist, hineingeschwenkt werden, wenn es nicht genutzt wird, um so im Toilettenbereich mehr Bewegungsfreiheit zu schaffen.

## Patentansprüche

1. Sanitäreinrichtung in Kleinräumen, insbesondere von Wohnmobilen, Flugzeugen, Yachten oder Tiny-Houses mit mindestens einem Duschraum (D) sowie einer angrenzenden Liegefläche (B), wobei bei Nichtnutzung des Duschbereichs zur Nutzung des Bettes ein die angrenzende Liegefläche verlängerndes Teil (E) in den Duschbereich, insbesondere durch Einlegen, Abklappen, Einschwenken oder dergleichen einbringbar ist, oder die angrenzende Liegefläche (B) in den Duschbereich verschiebbar ist, so dass damit die gesamte benötigte Bettfläche zur Verfügung steht, und der Duschraum eine verschließbare Öffnung (Ö) der Duschwand zumindest in Richtung der Bettfläche aufweist, **dadurch gekennzeichnet, dass** sich an den Duschraum unmittelbar der Toilettenbereich (T) anschließt und der Zugang zum Duschbereich über den Toilettenbereich erfolgt, wobei die verschließbare Öffnung (Ö) der Duschwand im horizontalen Querschnitt L-förmig über Eck oder halbrund oder ellipsenförmig ausgebildet ist, wobei die Öffnung in der Höhe mindestens so bemessen ist, dass neben der Höhe der Liegefläche die erforderliche Bewegungsfreiheit für den darauf liegenden Körperabschnitt des Liegenden gegeben ist, und bei Nutzung der gesamten Bettfläche die infolge der Duschbenutzung etwaig noch feuchten Seitenwände des Duschbereichs (D) durch zur Einrichtung der Schlafstellung nach innen geklappte Teilflächen der Außenwände der Dusche mindestens in dem Teil, mit dem der eingebrachte Teil der Bettfläche und der darauf Liegende in Berührung kommen kann, vollständig verdeckt sind.

2. Sanitäreinrichtung nach Anspruch 1, **dadurch gekennzeichnet, dass** die Öffnung durch eine oder mehrere horizontal oder vertikal verschiebbare starre Klappen verschließbar ist.

3. Sanitäreinrichtung nach Anspruch 1, **dadurch gekennzeichnet, dass** die Öffnung durch eine wasserundurchlässige oder zumindest wasserabweisende Textil- oder Folienbahn verschließbar ist, die aufrollbar oder hängend angeordnet ist.

4. Sanitäreinrichtung nach Anspruch 1, **dadurch gekennzeichnet, dass** die Öffnung durch eine oder mehrere mittels Scharniere, Klavierbänder (Sch1, Sch2) oder dergleichen klappbar gelagerte Klappen (K1, K2) verschließbar ist.

5. Sanitäreinrichtung nach Anspruch 4, **dadurch gekennzeichnet, dass** die Öffnung (Ö) mit mindestens zwei starren oder zumindest in Teilen starren Klappen (K1, K2) verschließbar ist, wobei die Klappen seitlich durch Scharniere (Sch1, Sch2) oder dergleichen angeschlagen sind und in den Duschraum öffenbar sind, so dass durch sie im vollständig geöffneten Zustand die Seitenwände und/oder der Zugang zum Duschraum zumindest teilweise abgedeckt ist.

6. Sanitäreinrichtung nach Anspruch 1, **dadurch gekennzeichnet, dass** die Öffnung (Ö) mit einer zumindest um die Hochachse flexiblen Platte (R) oder einer zumindest in einem Teilstück um die Hochachse flexiblen Platte (Rstarr, Rflex) verschließbar ist, wobei die Enden der Platte an den in horizontaler Sicht gegenüberliegenden Enden der Öffnung um die Hochachse beweglich, insbesondere durch Scharniere, Klavierband oder dergleichen (Sch1, Sch2) so befestigt sind, dass im geschlossenen Zustand die Öffnung durch die Platte verschlossen ist, während sie durch Druck von außerhalb des Duschraums oder/und durch Zug von innerhalb des Duschraums in horizontaler Richtung in die gegenüberliegende Stellung der Öffnung bringbar ist und damit einerseits die Öffnung freigebbar und gleichzeitig die Seitenwände und/oder der Zugang zum Duschraum zumindest teilweise abdeckbar ist.

7. Sanitäreinrichtung nach Anspruch 1, **dadurch gekennzeichnet, dass** die Öffnung (Ö) mit einer Rollladen- bzw. Lamellenfläche (R), deren Lamellen vertikal verlaufen, verschließbar ist, wobei die Enden der Rollladen- bzw. Lamellenfläche an den in horizontaler Sicht gegenüberliegenden Enden der Öffnung (Ö) beweglich durch Scharniere, Klavierband (Sch1, Sch2) oder dergleichen so befestigt sind, dass im geschlossenen Zustand die Öffnung durch die Rollladen- bzw. Lamellenfläche verschlossen ist , während sie durch Druck von außerhalb des Duschraums und/oder Zug von innerhalb des Duschraums in die gegenüberliegende Stellung bringbar ist und damit die Öffnung freigebbar ist und gleichzeitig die Seitenwände und/oder der Zugang zum Duschraum zumindest teilweise abdeckbar ist.

8. Sanitäreinrichtung nach Anspruch 7, **dadurch gekennzeichnet, dass** die die Öffnung verschließende Fläche aus einer Kombination von Teilstücken von um die Hochachse flexiblen Rollladen- bzw. Lamellenflächen (Rflex) und damit seitlich verbundenen um die Hochachse starren oder nahezu starren Flächen (Rstarr) besteht, insbesondere wobei die starren Flächen dadurch gebildet sind, dass Teilflächen der eigentlich konstruktionsbedingt um die Hochachse flexiblen Rollladen- bzw. Lamellenflächen durch technische Vorkehrungen, insbesondere Umrahmung, Verklebung, das Einbringen von Querstreben oder dergleichen, nicht mehr oder nur noch geringfügig flexibel ausgeführt sind.

9. Sanitäreinrichtung nach Anspruch 1, **dadurch gekennzeichnet , dass** die Öffnung (Ö) mit mindestens drei starren Teilstücken (T1; T2; T3), die miteinander seitlich mit Scharnieren, Klavierband oder dergleichen beweglich verbunden sind (Sch1; Sch2), verschließbar ist, wobei die jeweils äußeren Teilstücke an den in horizontaler Sicht gegenüberliegenden Enden der Öffnung um die Hochachse beweglich, insbesondere durch Scharniere, Klavierband oder dergleichen, befestigt sind (SchÖ1; SchÖ2).

10. Sanitäreinrichtung nach Anspruch 6, 7, 8 oder 9, **dadurch gekennzeichnet, dass** die die Öffnung verschließende Vorrichtung an ihrem oberen Ende mit einer oder mehreren Führungsschienen oder dergleichen verbunden ist, die während des Verbringens der Verschlussvorrichtung von der die Öffnung verschließenden Position in die gegenüberliegende Stellung die Rollladen- bzw. Lamellenfläche führt.

11. Sanitäreinrichtung nach einem der vorstehenden Ansprüche, **dadurch gekennzeichnet, dass** das in den Duschbereich einzubringende, den angrenzenden Liegebereich (B) verlängernde Teil (E) aus einer Unterlage, vorzugsweise in Gestalt einer Platte, eines Lattenrosts oder dergleichen besteht, auf dem eine Auflage in Gestalt eines Matratzenstücks aufliegt, wobei die Unterlage klappbar befestigt ist, vorzugsweise in Richtung des angrenzenden Liegebereichs.

12. Sanitäreinrichtung nach einem der vorstehenden Ansprüche, **dadurch gekennzeichnet, dass** die Unterlage des in den Duschbereich einzubringenden, den angrenzenden Liegebereich verlängernden Teils (E) so ausgeformt ist, dass mit ihm bei Nutzung der Dusche die Öffnung der Duschwand ganz oder teilweise verschließbar ist.

13. Sanitäreinrichtung nach einem der vorstehenden Ansprüche, **dadurch gekennzeichnet, dass** unter dem Bereich des an den Duschbereich angrenzenden Bettteils(B) ein ausziehbarer Lastenauszug, insbesondere der durch Teleskopschienen oder -rohre oder dergleichen gebildet ist, angebracht ist und im ausgezogenen Zustand eine Auflage für den Matratzenteil (E) einschließlich einer sich etwaig darunter sich befindenden Unterlage bildet.

14. Sanitäreinrichtung nach einem der vorstehenden Ansprüche, **dadurchge kennzeichnet**, dass Verschlußelemente der Öffnung jeweils an den horizontal gegenüberliegenden Enden der Öffnung der im horizontalen Schnitt L-förmigen über Eck, halbrunden oder ellipsenförmigen Öffnung fixiert sind und eine gekrümmte Außenwand des Wohnmobils, Flugzeugs oder Raums zugleich eine Seitenwand des Duschraums bildet.

15. Sanitäreinrichtung nach einem der vorstehenden Ansprüche, **dadurchge kennzeichnet**, dass Verschlußelemente der Öffnung beidseitig an den in horizontaler Sicht gegenüberliegenden Enden der Öffnung (Ö) befestigt und untereinander verbunden sind.

## Claims

1. Sanitary installation in small rooms, in particular of mobile homes, aircraft, yachts or tiny houses, having at least one shower space (D) and an adjacent lying surface (B), wherein, when the shower region is not in use, for use of the bed, a part (E) which extends the length of the adjacent lying surface is able to be introduced into the shower region, in particular by inserting, folding down, pivoting or the like, or the adjacent lying surface (B) is displaceable into the shower region, such that the entire required bed surface is thus available, and the shower space has a closable opening (Ö) of the shower wall at least in the direction of the bed surface, **characterized in that** the toilet region (T) directly adjoins the shower space and the access to the shower region takes place via the toilet region, wherein the closable opening (Ö) of the shower wall in horizontal cross section is L-shaped by way of a corner, or semi-round or elliptical, wherein the height of the opening is sized at least such that, in addition to the height of the lying surface, there is the required freedom of movement for the body portion of the person lying thereon, and when the entire bed surface is used, the lateral walls of the shower region (D) which may still be moist as a result of the use of the shower are completely covered by inwardly folded sub-surfaces of the external walls of the shower for configuring the sleeping position at least in the part with which the introduced part of the bed surface and the person lying thereon can come into contact.

2. Sanitary installation according to Claim 1, **characterized in that** the opening is able to be closed by one or a plurality of horizontally or vertically displaceable rigid flaps.

3. Sanitary installation according to Claim 1, **characterized in that** the opening is able to be closed by a water-impermeable or at least water-repellent textile or film web which is arranged such that it can be rolled up or suspended.

4. Sanitary installation according to Claim 1, **characterized in that** the opening is able to be closed by one or a plurality of flaps (K1, K2) which are mounted such that they are able to be folded by means of hinges, piano hinges (Sch1, Sch2) or the like.

5. Sanitary installation according to Claim 4, **characterized in that** the opening (Ö) is able to be closed by at least two rigid or at least partially rigid flaps (K1, K2), wherein the flaps are laterally attached by hinges (Sch1, Sch2) or the like and are able to be opened into the shower space, such that, in the completely open state, the lateral walls and/or the access to the shower space is at least partially covered by them.

6. Sanitary installation according to Claim 1, **characterized in that** the opening (Ö) is able to be closed by a board (R) which is flexible at least about the vertical axis or by a board (Rrigid, Rflex) which is flexible at least in a portion about the vertical axis, wherein the ends of the board are fastened to the ends of the opening lying opposite one another in a horizontal view, so as to be movable about the vertical axis, in particular by hinges, piano hinge or the like (Sch1, Sch2), in such a way that, in the closed state, the opening is closed by the board, while the latter can be brought into the opposite position of the opening in the horizontal direction by pressure from outside the shower space and/or by pulling from inside the shower space and thus, on the one hand, the opening is able to be exposed and, at the same time, the lateral walls and/or the access to the shower space are/is able to be at least partially covered.

7. Sanitary installation according to Claim 1, **characterized in that** the opening (Ö) is able to be closed by means of a roller-type or slat surface (R), the slats of which run vertically, wherein the ends of the roller-type or slat surface are fastened movably by hinges, piano hinge (Sch1, Sch2) or the like at the ends of the opening (Ö) which lie opposite one another in a horizontal view, so that, in the closed state, the opening is closed by the roller-type or slat surface, while the latter can be brought into the opposite position by pressure from outside the shower space and/or by pulling from inside the shower space and thus the opening is able to be exposed and at the same time the lateral walls and/or the access to the shower space are/is able to be at least partially covered.

8. Sanitary installation according to Claim 7, **characterized in that** the surface closing the opening consists of a combination of parts of roller-type or slat surfaces (Rflex) which are flexible about the vertical axis, and of rigid or virtually rigid surfaces (Rrigid) which are connected laterally thereto about the vertical axis, in particular wherein the rigid surfaces are formed in that partial surfaces of the roller-type or slat surfaces, which due to their construction are inherently flexible about the vertical axis, are embodied so as to be no longer, or only slightly, flexible by technical measures, in particular framing, adhesive bonding, the incorporation of transverse stays, or the like.

9. Sanitary installation according to Claim 1, **characterized in that** the opening (Ö) is able to be closed by at least three rigid parts (T1; T2; T3) which are movably connected to one another laterally with hinges, piano hinge or the like (Sch1; Sch2), wherein the respective outer parts are fastened to the ends of the opening lying opposite one another in a horizontal view so as to be movable about the vertical axis, in particular by hinges, piano hinge or the like (SchÖ1; SchÖ2).

10. Sanitary installation according to Claim 6, 7, 8 or 9, **characterized in that** the device closing the opening is connected at its upper end to one or a plurality of guide rails or the like, which guide(s) the roller-type or slat surface during the displacement of the closure device from the position that closes the opening into the opposite position.

11. Sanitary installation according to one of the preceding claims, **characterized in that** the part (E) which is to be introduced into the shower region and which extends the length of the adjacent lying region (B) consists of a base, preferably in the form of a board, a slat frame or the like, on which bears a support in the form of a piece of mattress, wherein the base is fastened in a foldable manner, preferably so as to be foldable in the direction of the adjacent lying region.

12. Sanitary installation according to one of the preceding claims, **characterized in that** the base of the part (E) which is to be introduced into the shower region and extends the length of the adjacent lying region is formed in such a way that the opening of the shower wall is able to be completely or partially closed with it when the shower is in use.

13. Sanitary installation according to one of the preceding claims, **characterized in that in that** an extractable load drawer, in particular which is formed by telescopic rails or tubes or the like, is attached below the region of the bed part (B) adjoining the shower region, and in the extracted state forms a support for the mattress part (E) including a base potentially situated thereunder.

14. Sanitary installation according to one of the preceding claims, **characterized in that** closure elements of the opening are fixed in each case at the horizontally opposite ends of the opening of the opening, which in horizontal section is L-shaped by way of a corner, semicircular or elliptical, and a curved external wall of the mobile home, aircraft or room simultaneously forms a lateral wall of the shower space.

15. Sanitary installation according to one of the preceding claims, **characterized in that** closure elements of the opening are fastened on both sides to the ends of the opening (Ö) lying opposite one another in a horizontal view and are connected to one another.

## Revendications

1. Equipement sanitaire dans de petits espaces, en particulier de camping-cars, d'avions, de yachts ou de tiny houses avec au moins une salle de douche (D) ainsi qu'avec une surface de couchage (B) attenante, une partie (E) prolongeant la surface de couchage attenante pouvant être amenée, en particulier par insertion, rabattement, pivotement ou similaire, dans l'espace de douche ou la surface de couchage (B) attenante pouvant être coulissée dans l'espace de douche pour utiliser le lit en cas de non-utilisation de l'espace de douche, de telle sorte qu'ainsi la totalité de la surface de lit requise est disponible, et la salle de douche comportant une ouverture (Ö) fermable de la paroi de douche au moins en direction de la surface de lit, **caractérisé en ce que** l'espace des toilettes (T) se situe directement dans le prolongement de la salle de douche et l'accès à l'espace de douche se fait par l'espace des toilettes, l'ouverture (Ö) fermable de la paroi de douche étant réalisée dans la section transversale horizontale en forme de L sur un coin ou de manière semi-circulaire ou avec une forme elliptique, l'ouverture étant dimensionnée en hauteur de telle sorte qu'outre la hauteur de la surface de couchage, la liberté de mouvement requise pour la partie du corps située dessus de la personne allongée dessus est assurée, et, en cas d'utilisation de la totalité de la surface de lit, les parois latérales de l'espace de douche (D) légèrement encore humides suite à l'utilisation de la douche étant totalement dissimulées au moins dans la partie, avec laquelle la partie amenée de la surface de lit et la personne allongée dessus peuvent venir en contact, par des surfaces partielles des parois extérieures de la douche rabattues vers l'intérieur pour la mise en place de la position de sommeil.

2. Equipement sanitaire selon la revendication 1, **caractérisé en ce que** l'ouverture peut être fermée par un ou plusieurs volets rigides pouvant être coulissés horizontalement ou verticalement.

3. Equipement sanitaire selon la revendication 1, **caractérisé en ce que** l'ouverture peut être fermée par une bande de tissu ou de film imperméable ou au moins hydrofuge, qui est disposée de manière à pouvoir être enroulée ou en suspension.

4. Equipement sanitaire selon la revendication 1, **caractérisé en ce que** l'ouverture peut être fermée par un ou plusieurs volets (K1, K2) montés de manière rabattable au moyen de charnières, de charnières piano (Sch1, Sch2) ou similaires.

5. Equipement sanitaire selon la revendication 4, **caractérisé en ce que** l'ouverture (Ö) peut être fermée avec au moins deux volets (K1, K2) rigides ou au moins partiellement rigides, les volets pouvant être accrochés latéralement par des charnières (Sch1, Sch2) ou similaires et pouvant être ouverts dans la salle de douche de telle sorte qu'ils recouvrent dans l'état totalement ouvert au moins en partie les parois latérales et/ou l'accès à la salle de douche.

6. Equipement sanitaire selon la revendication 1, **caractérisé en ce que** l'ouverture (Ö) peut être fermée avec un panneau (R) flexible au moins autour de l'axe vertical ou un panneau partiellement flexible autour de l'axe vertical (Rrigide, Rflex), les extrémités du panneau étant fixées sur les extrémités horizontalement opposées de l'ouverture de manière mobile autour de l'axe vertical, en particulier par des charnières, une charnière piano ou similaires (Sch1, Sch2) de telle sorte que, dans l'état fermé, le panneau ferme l'ouverture, tandis qu'il peut être amené dans la position opposée de l'ouverture dans une direction horizontale par pression depuis l'extérieur de la salle de douche et/ou par traction depuis l'intérieur de la salle de douche et l'ouverture peut ainsi d'une part être dégagée et les parois latérales et/ou l'accès à la salle de douche peuvent être recouverts au moins en partie simultanément.

7. Equipement sanitaire selon la revendication 1, **caractérisé en ce que** l'ouverture (Ö) peut être fermée par un volet roulant ou une surface à lattes (R), dont les lattes s'étendent verticalement, les extrémités du volet roulant ou de la surface à lattes étant fixées de manière mobile par des charnières, une charnière piano (Sch1, Sch2) ou similaires sur les extrémités de l'ouverture (Ö) horizontalement opposées de telle sorte que, dans l'état fermé, le volet roulant ou la surface à lattes ferme l'ouverture, tandis qu'il/elle peut être amené(e) dans la position opposée par pression depuis l'extérieur de la salle de douche et/ou par traction depuis l'intérieur de la salle de douche et ainsi l'ouverture peut être dégagée et, simultanément, les parois latérales et/ou l'accès à la salle de douche peuvent être recouverts au moins en partie.

8. Equipement sanitaire selon la revendication 7, **caractérisé en ce que** la surface fermant l'ouverture est constituée d'une combinaison de portions de volets roulants ou de surfaces à lattes (Rflex) flexibles autour de l'axe vertical et de surfaces rigides ou quasi rigides (Rrigide) autour de l'axe vertical reliées ainsi latéralement, les surfaces rigides étant formées en particulier **en ce que** des surfaces partielles des volets roulants ou des surfaces à lattes flexibles autour de l'axe vertical de par leur structure à proprement parler ne sont plus réalisées de manière flexible ou seulement encore de manière légèrement flexible par des mesures techniques, en particulier par encadrement, collage, l'insertion de traverses ou similaire.

9. Equipement sanitaire selon la revendication 1, **caractérisé en ce que** l'ouverture (Ö) peut être fermée avec au moins trois portions rigides (T1 ; T2 ; T3), qui sont reliées de manière mobile entre elles latéralement par des charnières, une charnière piano ou similaires (Sch1 ; Sch2), les portions respectivement extérieures étant fixées (SchÖ1 ; SchÖ2) de manière mobile autour de l'axe vertical sur les extrémités horizontalement opposées de l'ouverture, en particulier par des charnières, une charnière piano ou similaires.

10. Equipement sanitaire selon la revendication 6, 7, 8 ou 9, **caractérisé en ce que** le dispositif fermant l'ouverture est relié sur son extrémité supérieure à un ou plusieurs rails de guidage ou similaires, qui guide/guident le volet roulant ou la surface à lattes pendant que le dispositif de fermeture est amené depuis la position fermant l'ouverture dans la position opposée.

11. Equipement sanitaire selon l'une des revendications précédentes, **caractérisé en ce que** la partie (E) prolongeant l'espace de couchage (B) à amener dans l'espace de douche est constituée d'une base, de préférence sous la forme d'un panneau, d'un sommier à lattes ou similaire, sur lequel repose un support sous la forme d'un morceau de matelas, la base étant fixée de manière rabattable, de préférence en direction de l'espace de couchage attenant.

12. Equipement sanitaire selon l'une des revendications précédentes, **caractérisé en ce que** la base de la partie (E) prolongeant l'espace de couchage attenant, à amener dans l'espace de douche est formée de telle sorte qu'elle permet de fermer en totalité ou en partie l'ouverture de la paroi de douche lors de l'utilisation de la douche.

13. Equipement sanitaire selon l'une des revendications précédentes, **caractérisé en ce que** sous l'espace de la partie de lit (B) attenante à l'espace de douche, une rallonge extensible, qui est formée en particulier par des rails ou des tubes télescopiques ou similaires, est installée et forme, dans l'état déployé, un support pour la partie de matelas (E) y compris une base se trouvant à peu près en dessous.

14. Equipement sanitaire selon l'une des revendications précédentes, **caractérisé en ce que** des éléments de fermeture de l'ouverture sont fixés chacun sur les extrémités horizontalement opposées de l'ouverture en forme de L sur un coin, semi-ronde ou de forme elliptique dans la section horizontale et une paroi extérieure incurvée du camping-car, de l'avion ou de la pièce forme dans le même temps une paroi latérale de la salle de douche.

15. Equipement sanitaire selon l'une quelconque des revendications précédentes, **caractérisé en ce que** des éléments de fermeture de l'ouverture sont fixés de part et d'autre sur les extrémités de l'ouverture (Ö) horizontalement opposées et sont reliés les uns aux autres.
